Europäisches Patentamt

European Patent Office

Office européen des brevets

(19)

(11) Veröffentlichungsnummer: **0 301 109**
**A1**

(12) **EUROPÄISCHE PATENTANMELDUNG**

(21) Anmeldenummer: **87110848.6**

(22) Anmeldetag: **27.07.87**

(51) Int. Cl.⁴: **G01L 1/22 , G01L 1/26 ,
G01G 3/14**

(43) Veröffentlichungstag der Anmeldung:
**01.02.89 Patentblatt 89/05**

(84) Benannte Vertragsstaaten:
**AT BE CH DE ES FR GB GR IT LI LU NL SE**

(71) Anmelder: **Carl Schenk AG
Landwehrstrasse 55 Postfach 40 18
D-6100 Darmstadt(DE)**

(72) Erfinder: **Rettig, Manfred
Eberstädter Strasse 5
D-6109 Mühltal 1(DE)**
Erfinder: **Giesecke, Peter, Dr.
Talstrasse 2 a
D-6104 Seeheim (Stettbach)(DE)**

(74) Vertreter: **Brand, Fritz, Dipl.-Ing.
Carl Schenck AG Patentabteilung
Landwehrstrasse 55 Postfach 4018
D-6100 Darmstadt(DE)**

(54) **Kraftaufnehmer zur Messung von Druck- und/oder Zugkräften.**

(57) Ein Kraftaufnehmer zur Messung von Druck-
und/oder Zugkräften, mit einem Meßkörper, an dem
Dehnungsaufnehmer zur Kraftmessung angeordnet
sind soll so ausgebildet werden, daß er insbesondere weitgehend querkraftunempfindlich und für außermittigen Kraftangriff geeignet ist sowie eine niedrige Bauhöhe aufweist. Dies wird dadurch erreicht,
daß der Meßkörper aus einem Zentralelement (I, 2I)
und aus drei, vorzugsweise in einem Winkel von
I20° zueinander am Umfang des Zentralelements
angeordneten und von diesem radial abstehenden
Kraftübertragungselementen (2, 22) besteht, die an
ihren freien Enden stützbar sind und daß die Dehnungsaufnehmer (4) an den Kraftübertragungselementen (2, 22) angeordnet und in geeigneter Weise zur
Messung der auf das Zentralelement (I, 2I) aufgebrachten Kräfte geschaltet sind. Ein solcher Kraftaufnehmer kann auch als Wägemodul mit einer Wägeplattform als Zentralelement ausgebildet werden.

Figur 1

## Kraftaufnehmer zur Messung von Druck- und/oder Zugkräften

Die Erfindung betrifft einen Kraftaufnehmer zur Messung von Druck- und/oder Zugkräften, mit einem Meßkörper, an dem Dehnungsaufnehmer zur Kraftmessung angeordnet sind.

Kraftaufnehmer zur Messung von Druck- und/oder Zugkräften, auch als (Kraft-) Meßdose, (Kraft-) Meßzelle, Lastwandler, Lastzelle, Wägezelle usw. bezeichnet, sind in vielfältigen Ausführungsformen bekannt. Sie werden als Einzelelemente zur Messung von Druck- und/oder Zugkräften, z. B. in der Prüftechnik, als Wägezellen bei elektromechanischen Waagen und für viele andere Aufgaben und Verwendungszwecke eingesetzt.

Die bekannten Kraftaufnehmer sind im allgemeinen querkraftempfindlich. Wenn außer den zu messenden Normalkräften Querkräfte oder Momente auftreten und auf den Kraftaufnehmer einwirken, wird das Meßergebnis verfälscht. Die störenden Kräfte oder Momente müssen daher in geeigneter Weise vom Kraftaufnehmer ferngehalten werden, d. h. es müssen besondere Maßnahmen getroffen werden, die verhindern, daß Querkräfte oder Momente sich am Kraftaufnehmer in unzulässiger Weise auswirken. Dies bedingt jedoch teilweise komplizierte Anordnungen bei der Krafteinleitung in den Aufnehmer.

Weiterhin sind die bekannten Kraftaufnehmer meist nicht geeignet für außermittige Kräfte bzw. Krafteinleitung. Oft ist auch die nicht unerhebliche Bauhöhe von bekannten Kraftaufnehmern von Nachteil.

Es ist Aufgabe der vorliegenden Erfindung, die bekannten Nachteile des Standes der Technik zu vermeiden und einen weitgehend querkraftunempfindlichen Kraftaufnehmer niedriger Bauhöhe zu schaffen, der auch für außermittigen Kraftangriff geeignet ist. Diese Aufgabe wird durch die in den Patentansprüchen angegebenen Merkmale gelöst. Die Ansprüche erfassen auch Ausgestaltungen der Erfindung.

Durch Verwendung eines Meßkörpers mit einem Zentralelement und drei, vorzugsweise in einem Winkel von 120° zueinander am Umfang des Zentralelements angeordneten und von diesem radial abstehenden Kraftübertragungselementen, die an ihren freien Enden abstützbar sind, wobei die Dehnungsaufnehmer an den Kraftübertragungselementen angeordnet und in geeigneter Weise zur Messung der auf das Zentralelement aufgebrachten Kräfte geschaltet sind, wird ein Kraftaufnehmer geschaffen, der querkraftunempfindlich ist, außermittigen Kraftangriff erlaubt, eine besonders geringe Bauhöhe aufweist und vielfältig einsetzbar ist.

Bei dem erfindungsgemäßen Kraftaufnehmer können komplexe und und teure Krafteinleitungsteile, die Kräfte quer zur Meßrichtung aufnehmen bzw. die Einleitung von Momenten in den Aufnehmer verhindern, entfallen. Der Aufnehmer weist gegen Querkräfte aus beliebiger Richtung und gegen Momente eine durch die Bauart bedingte Selbstkompensation auf. Bei geeigneter Schaltung der Dehnungsaufnehmer können Querkräfte und Momente auch erfaßt und gemessen werden. Außermittige Krafteinleitungen können kompensiert werden bzw. sind nicht störend. Durch die Drei-Punkt-Abstützung ist eine besonders flache Bauweise möglich. Der Kraftaufnehmer kann ohne großen Aufwand in vorhandene Strukturen eingebaut werden.

Der erfindungsgemäße Kraftaufnehmer kann als Wägemodul ausgebildet werden, wobei das Zentralelement des Aufnehmers aus einer Wägeplattform besteht. Die Wägeplattform wird vorzugsweise dreieckförmig ausgebildet. Mehrere Wägemodule können, ggf. zusammen mit Plattformmodulen ohne Meßkörper, zu einer größeren Wägebrücke zusammengeschaltet werden. Hierbei lassen sich beliebige Brückengrößen aus gleichen Bauelementen zusammensetzen. Die Wägemodule erlauben eine besonders flache Bauweise.

Eine vorteilhafte Ausgestaltung der Erfindung ergibt sich, wenn die Kraftübertragungselemente an ihren Enden in einem Aufnahmeelement, vorzugsweise einem glockenförmigen Element, befestigt werden, wobei das Aufnahmeelement einen mittig angeordneten Zapfen aufweist. Mit einer solchen Anordnung können auf einfache Weise insbesondere Zugkräfte gemessen werden.

Die Erfindung wird an Ausführungsbeispielen in den Zeichnungen dargestellt und in der Beschreibung näher erläutert. Es zeigen:

Fig. 1 Kraftaufnehmer in Draufsicht (unten), teilweise geschnitten, und in Seitenansicht

Fig. 2 glockenförmiges Aufnahmeelement für einen Kraftaufnehmer, Axial- und Radialschnitt (oben)

Fig. 3 Kraftaufnehmer, eingebaut in ein glockenförmiges Aufnahmeelement

Fig. 4 dreieckförmiges Wägemodul, Seitenansicht und Draufsicht (unten).

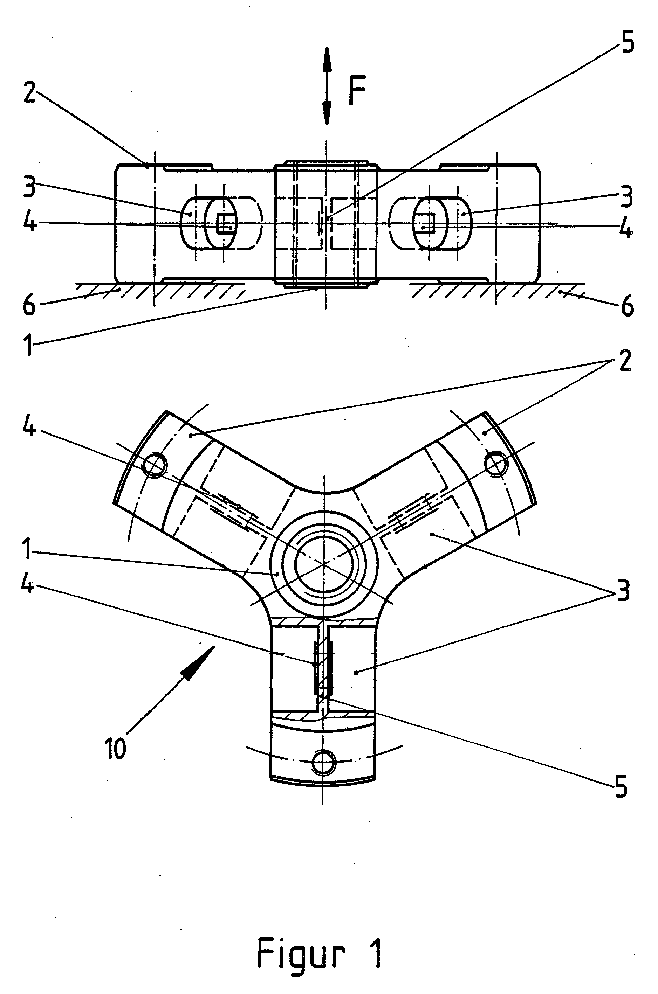

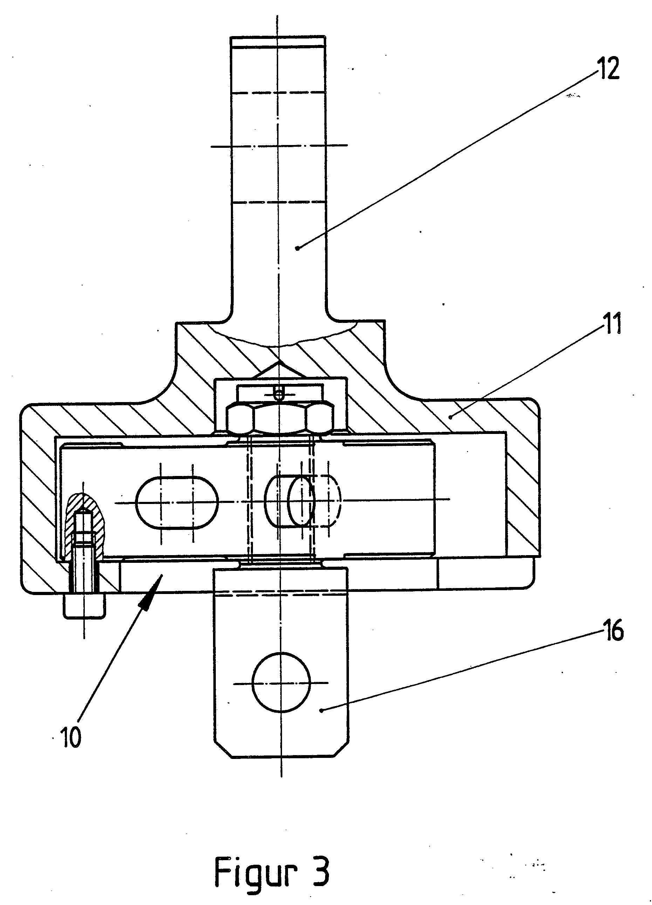

Der Kraftaufnehmer nach Fig. 1 weist einen Meßkörper 10 mit einem nabenförmigen Zentralelement 1 auf, an dem drei arm- oder speichenförmig ausgebildete, jeweils um 120° am Umfang zueinander versetzte Kraftübertragungselemente 2 angeordnet sind. Das Zentralelement 1 und die Kraftübertragungselemente 2 sind fest miteinander verbunden bzw. aus einem Stück hergestellt. Das Zentralelement 1 kann mit einer Durchgangs- oder Gewindebohrung versehen sein (siehe auch Fig. 3).

Die Kraftübertragungselemente 2 weisen auf beiden Seiten Aussparungen 3 auf, die wie dargestellt so ausgebildet sind, daß im mittleren Bereich des einzelnen Kraftübertragungselements ein etwa doppel-T-förmiger Querschnitt entsteht. Die Dehnungsaufnehmer 4, z. B. Schubspannungsaufnehmer, werden vorzugsweise beidseitig am Steg 5 des doppel-T-förmigen Querschnitts in gleichen Abständen zur Symmetrieebene angeordnet (s. Zeichnung).

Der dargestellte Kraftaufnehmer ist so ausgebildet, daß die Meßkraft F zentral eingeleitet werden kann. Durch die Kraftübertragung auf die freien Enden der drei Kraftübertragungselemente 2 ist eine statisch bestimmte Abstützung des Aufnehmers an den Auflageflächen 6 gegeben. Der Kraftaufnehmer kann dabei in geeigneter Weise, z. B. durch Verschraubung, an den Auflageflächen befestigt sein. Die Krafteinleitung und Kraftabstützung kann bei entsprechender Ausbildung der Gesamtanordnung auch auf der gleichen Seite des Kraftaufnehmers erfolgen.

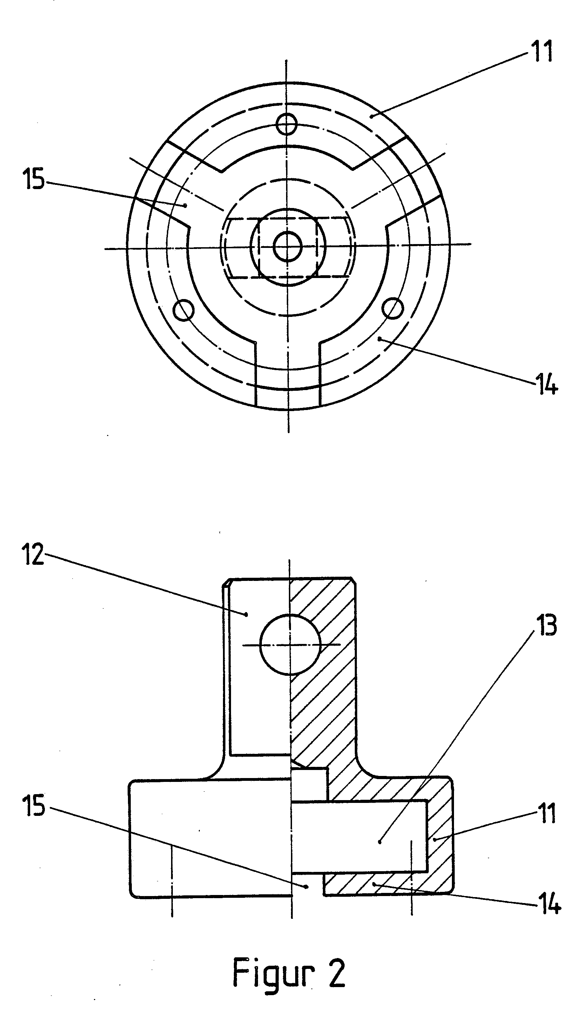

In Fig. 2 ist ein glockenförmiges Aufnahmeelement 11 mit einem Befestigungs- oder Kraftübertragungszapfen 12 dargestellt. Der Kraftaufnehmer wird in die Öffnung 13 eingesetzt, wie in Fig. 3 dargestellt. In Radialschnitt durch das Aufnahmeelement 11 (in Fig. 2 oben) ist eine ringförmige, unterbrochene Flanschfläche 14 erkennbar. Durch die Unterbrechungen 15 wird der Kraftaufnehmer mit den Kraftübertragungselementen 2 in das Aufnahmeelement 11 eingesetzt und innerhalb des glockenförmigen Aufnahmeelements verdreht, so daß die freien Enden der Kraftübertragungselemente 2 an den Flanschflächen 14 aufliegen. Die Kraftübertragungselemente 2 können z. B. durch Verschrauben an den Auflageflächen 14 mit dem Aufnahmeelement 11 fest verbunden werden.

Fig. 3 zeigt ein Ausführungsbeispiel eines mit einem Aufnahmeelement 11 zusammengebauten Kraftaufnehmers, wobei am Kraftaufnehmer ein Zapfen oder Bolzen 16 für die Krafteinleitung bzw. Kraftübertragung vorgesehen ist. Die Mittelachse des Zapfens 12 und die Mittelachse des Meßkörpers 10 bzw. des Zapfens 16 sind fluchtend angeordnet.

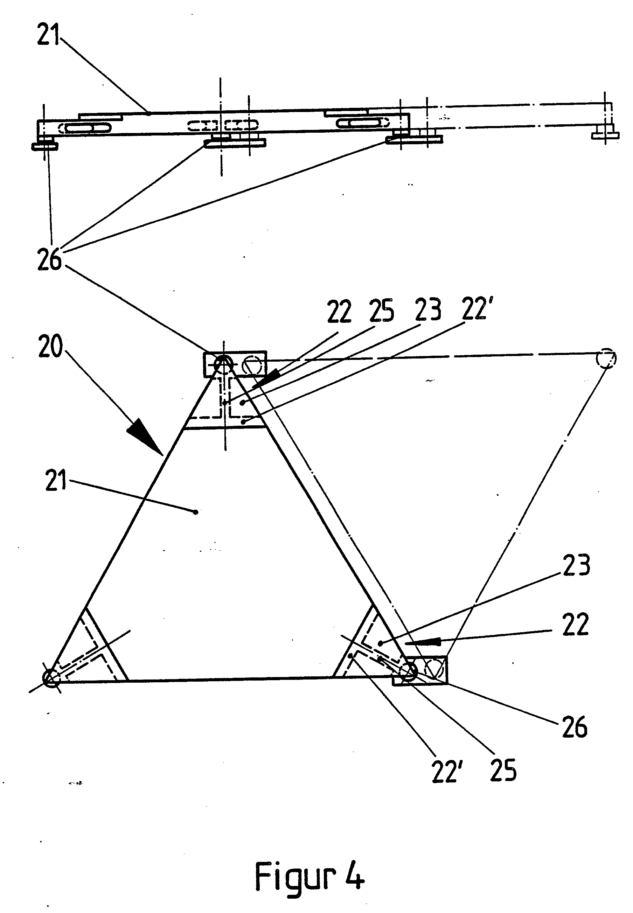

In Fig. 4 ist ein als Wägemodul 20 ausgebildeter Kraftaufnehmer dargestellt. In diesem Ausführungsbeispiel ist das Zentralelement als in der Grundform dreieckige Wägeplattform 21 ausgeführt. An den Ecken der Wägeplattform 21 sind Kraftübertragungselemente 22 angeordnet. Die Kraftübertragungselemente 22 können über Flanschelemente 22' mit der Wägeplattform 21 z. B. durch Verschrauben verbunden sein. Sie weisen taschenförmige Aussparungen 23 und Stege 25 auf, die ähnlich wie die Aussparungen und Stege im Ausführungsbeispiel nach Fig. 1 ausgebildet sind.

An den Stegen 25 sind die Dehnungsaufnehmer angeordnet.

In einer anderen Ausführungsform sind die Kraftübertragungselemente 22, wie in der Zeichnung dargestellt, als Bestandteil der Wägeplattform ausgebildet. Die Wägeplattform ist z. B. eine dreieckige Stahlplatte, in deren Ecken die Kraftübertragungselemente 22 eingearbeitet sind. Die Wägeplattform 21 und die Kraftübertragungselemente 22 bilden eine Einheit. Die Bauhöhe von Kraftübertragungselementen und Wägeplattform kann unterschiedlich sein, z. B. können die Kraftübertragungselemente niedriger sein als die Wägeplattform (s. Seitenansicht der Darstellung).

An den äußeren Ecken der Kraftübertragungselemente 22 können Abstützelemente oder Füße 26, z. B. in Form von Elastomerelementen angeordnet sein, die die Auflagepunkte des Wägemoduls bilden und dieses z. B. auf dem Boden oder auf einem Fundament abstützen. Durch die Drei-Punkt-Abstützung ist eine statisch bestimmte Aufstellung des Wägemoduls möglich. Das Wägemodul ist daher auch für unebene Aufstellflächen geeignet. Es kann als Gußteil, als Blechteil oder als Platte ausgebildet werden.

Zur Bildung von Wägebrücken können mehrere Wägemodule miteinander verbunden werden, z. B. wie gestrichelt in Fig. 4 unten für zwei Wägemodule angedeutet. Die Abstützelemente 26 können hierbei so ausgebildet werden, daß sie als Verbindungselemente für die einzelnen Module dienen. Mit dem beschriebenen Wägemodul lassen sich beliebige Brückengrößen bilden. Durch die vielfache Abstützung können auch große Wägebrücken sehr flach ausgeführt werden.

Für größere Wägebrücken können zusätzlich Blindelemente oder Adapterplatten, die als Plattformelemente ohne Meßkörper ausgebildet sind, verwendet werden. Im Reparaturfall ist ein einfacher Austausch der Module möglich.

Zur Bildung einer quadratischen oder rechteckigen Wägebrücke können Plattformelemente, die aus gleichseitigen oder ungleichseitigen rechtwinkligen Dreiecken bestehen, verwendet werden.

Das Wägemodul kann zur Bestimmung von Rad- und Achslasten oder des Gesamtgewichtes eingesetzt werden.

Die Dehnungsaufnehmer 4 an den Kraftübertragunselementen 2, 22 können für jedes einzelne Element zu einer Vollbrücke geschaltet werden. Die Meßbrücken an den einzelnen Kraftübertragungselementen können parallel oder in Reihe geschaltet werden. Unabhängig vom Krafteinleitungspunkt ist die Summe der durch die Belastung hervorgerufenen Meßsignaländerung immer konstant, d. h. es tritt durch außermittige Krafteinleitung kein Meßfehler auf. Die Dehnungsaufnehmer 4 sind vorzugsweise als Schubspannungsaufnehmer ausgebildet.

Quer zur Meßrichtung wirkende Kräfte und Momente, die in beliebiger Umfangsrichtung angreifen, rufen keine Gesamtsignaländerung hervor, d. h. die Signaländerungen in den einzelnen arm- oder speichenförmigen Kraftübertragungselementen werden durch die Geometrie des Aufnehmers kompensiert. Die Messung von Querkräften oder Momenten ist möglich durch Auswertung der Einzelsignale eines Aufnehmers in einer geeigneten Rechnerschaltung.

**Ansprüche**

I. Kraftaufnehmer zur Messung von Druck- und/oder Zugkräften, mit einem Meßkörper, an dem Dehnungsaufnehmer zur Kraftmessung angeordnet sind, dadurch gekennzeichnet, daß der Meßkörper (I0) aus einem Zentralelement (I, 2I) und aus drei, vorzugsweise in einem Winkel von I20˚ zueinander am Umfang des Zentralelements (I, 2I) angeordneten und von diesem radial abstehenden Kraftübertragungselementen (2, 22) besteht, die an ihren freien Enden abstützbar sind und daß die Dehnungsaufnehmer (4) an den Kraftübertragungselementen (2, 22) angeordnet und in geeigneter Weise zur Messung der auf den Meßkörper (I0) aufgebrachten Kräfte geschaltet sind.

2. Kraftaufnehmer nach Anspruch I, dadurch gekennzeichnet, daß das Zentralelement (I) nabenförmig ausgebildet ist und arm- oder speichenförmige Kraftübertragungselemente (2) aufweist und daß Zentralelement (I) und Kraftübertragungselemente (2) zusammen eine Einheit bilden.

3. Kraftaufnehmer nach Anspruch I, dadurch gekennzeichnet, daß das Zentralelement aus einer Wägeplattform (2I) besteht und daß die Kraftübertragungselemente (22) armförmig ausgebildet sind, wobei die Gesamtanordnung ein Wägemodul (20) bildet.

4. Kraftaufnehmer nach einem der vorhergehenden Ansprüche, dadurch gekennzeichnet, daß die Kraftübertragungselemente (2, 22) auf beiden Seiten symmetrisch angeordnete Aussparungen (3, 23) aufweisen, daß die Aussparungen (3, 23) so ausgebildet und angeordnet sind, daß sich im mittleren Bereich des einzelnen Kraftübertragungselements (2, 22) ein etwa doppel-T-förmiger Querschnitt ergibt und daß die Dehnungsaufnehmer (4) in den Aussparungen (3, 23), vorzugsweise am Steg (5, 25) doppel-T-förmigen Querschnitts, angeordnet sind.

5. Kraftaufnehmer nach einem der vorhergehenden Ansprüche, dadurch gekennzeichnet, daß die Dehnungsaufnehmer (4) als Schubspannungsaufnehmer ausgebildet sind und/oder an jedem Kraftübertragungselement (2, 22) eine Vollbrückenschaltung vorgesehen ist, wobei die Dehnungsaufnehmer (4) parallel oder in Reihe schaltbar sind.

6. Kraftaufnehmer nach einem oder mehreren der vorhergehenden Ansprüche, dadurch gekennzeichnet, daß die Dehnungsaufnehmer (4) so geschaltet sind, daß auf den Kraftaufnehmer einwirkende Querkräfte und/oder Momente erfassbar sind.

7. Kraftaufnehmer nach Anspruch I, 2, 4 und 5, dadurch gekennzeichnet, daß die Kraftübertragungselemente (2) an ihren Enden in einem Aufnahmeelement (II), vorzugsweise einem glockenförmigen Element, befestigt sind, daß das Aufnahmeelement (II) an einer Seite einen mittig angeordneten Zapfen (I2) aufweist, wobei die Anordnung so getroffen ist, daß die Zapfenachse und die Mittelachse des Meßkörpers (I0) fluchten und daß über den Zapfen (I2) und das Zentralelement (I) des Meßkörpers (I0) Zug- und/oder Druckkräfte übertragbar sind.

8. Kraftaufnehmer nach Anspruch 3, dadurch gekennzeichnet, daß mehrere Wägemodule (20) zu einer Wägebrücke zusammengesetzt sind wobei ggf. zusätzliche Blindelemente in Form von Plattformmodulen ohne Meßkörper vorgesehen sind.

9. Kraftaufnehmer nach Anspruch 3 oder 8, dadurch gekennzeichnet, daß die Wägeplattform (2I) dreieckig ausgebildet ist, wobei vorzugsweise gleichseitige oder gleichschenklig rechtwinklige Dreiecksformen vorgesehen werden, und daß die Kraftübertragungselemente (22) an den Ecken der Wägeplattform (2I) angeordnet und/oder in diese integriert und Bestandteil der Wägeplattform (2I) sind.

I0. Kraftaufnehmer nach Anspruch 3, 8 oder 9, dadurch gekennzeichnet, daß an den Enden der Kraftübertragungselemente (22) Abstützelemente (26), vorzugsweise aus Kunststoff, zur Abstützung des Wägemoduls (20) auf dem Boden angeordnet sind, wobei die Abstützelemente (26) als Verbindungselemente für mehrere Wägemodule (20) oder Blindelemente ausgebildet sein können.

Figur 1

Figur 2

Figur 3

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 985 025 (ORMOND)<br>* Figur 1; Spalte 2, Zeilen 20-40 *<br>--- | 1-3 | G 01 L 1/22<br>G 01 L 1/26<br>G 01 G 3/14 |
| A | GB-A-2 178 862 (PURPOSE ENGINEERS LTD.)<br>* Figuren 1, 2; Ansprüche 1, 2, 4 *<br>--- | 1-3,9 | |
| A | US-A-4 621 533 (GINDY)<br>* Figur 3; Spalte 6, Zeilen 37-55 *<br>--- | 1,9 | |
| A | GB-A-2 033 592 (BOFORS AMERICA INC.)<br>* Figur 2; Zusammenfassung *<br>----- | 1 | |

**RECHERCHIERTE SACHGEBIETE (Int. Cl.4)**

G 01 L 1/22
G 01 L 1/26
G 01 G 3/12

Der vorliegende Recherchenbericht wurde für alle Patentansprüche erstellt

| Recherchenort | Abschlußdatum der Recherche | Prüfer |
|---|---|---|
| BERLIN | 10-04-1988 | KOEHN G |